# EUROPEAN PATENT APPLICATION

(11) **EP 2 634 421 A2**
(43) Date of publication of application: **04.09.2013**
(21) Application number: 12198940.4
(22) Date of filing: 21.12.2012
(51) Int. Cl.: F03D 7/04

(54) **Blade speed control system and control method thereof**

(30) Priority: 01.03.2012 TW 101106707
(71) Applicant: Delta Electronics, Inc., Taoyuan Hsien 333 (TW)
(72) Inventor: Hung, Yun-Chi, 333 Taoyuan Hsien (TW); Hsiao, Chih-Hung, 333 Taoyuan Hsien (TW); Chan, Cheng-Chieh, 333 Taoyuan Hsien (TW); Ciou, Hong-Ling, 333 Taoyuan Hsien (TW); Huang, Yuan-Fang, 333 Taoyuan Hsien (TW)
(74) Representative: Wablat Lange Karthaus

(57) **Abstract**

A blade speed control system is disclosed and applied to a generator and a blade. A control method of the blade speed control system includes: setting the blade speed control system to a first mode; detecting a voltage value and a current value of the generator by a processing unit; generating a modulated signal according to the voltage value and the current value by the processing unit; switching the blade speed control system to a second mode by the processing unit; and adjusting the current value according to the modulated signal by a control unit.

## Description

### BACKGROUND OF THE INVENTION

### Field of Invention

The present invention relates to a blade speed control system and a control method thereof, and in particular, to a blade speed control system of a wind power generating apparatus and a control method thereof.

### Related Art

Recently, the energy shortage has become the most considered issue, and thus many researchers and companies are devoted to the development and researches relating to the replaced energy, such as the green energy. The green energy, such as solar, tidal, marine current, or wind energy, is recyclable and would not contaminate the environment. Among these green energies, the wind resource is easily obtained, and the wind power generating apparatus can be built at the proper location to utilize the wind resource. Besides, the wind power generating apparatus has the advantages of zero pollution, inexhaustible, and high economical, so that it is one of the major replaced power system around the world.

The wind power generation is to utilize the flowing art to drive the blade of the wind power generating apparatus, and than use the gear and generator to transform the wind power into electricity. When the blade surface area of the wind power generating apparatus is larger, the effective area to be pushed by the wind is broader, so that the blade can be rotated by a wind with lower speed. Besides, when the wind speed is too high, the rotation speed of the blade is fast accordingly. However, if the generated electricity exceeds the capacity of the battery, the excess energy will be consumed as the load of the wind power generating apparatus. This effect limits the capability of the wind power generating apparatus. In addition, when the rotation speed of the blade becomes faster, it is easily to generate the over-current, which may damage the generator and thus affect the operation of the entire wind power generating apparatus.

Therefore, it is an important subject of the present invention to provide a blade speed control system and a control method thereof that can effectively control the rotation speed of the blade of a wind power generating apparatus, thereby avoiding the additional power consumption, preventing the damage of the generator and increasing the power generating performance.

### SUMMARY OF THE INVENTION

In view of the foregoing, an objective of the present invention is to provide a blade speed control system and a control method thereof that can effectively control the rotation speed of the blade of a wind power generating apparatus when the wind speed is too high, thereby further preventing the damage of the generator and increasing the power generating performance.

To achieve the above objective, the present invention discloses a control method of a blade speed control system, which is applied to a generator and a blade. The control method includes the steps of: setting the blade speed control system to a first mode; detecting a voltage value and a current value of the generator by a processing unit; generating a modulated signal according to the voltage value and the current value by the processing unit; switching the blade speed control system to a second mode by the processing unit; and adjusting the current value according to the modulated signal by a control unit.

In one embodiment of the invention, the control method of the blade speed control system is applied to a wind power generating apparatus.

In one embodiment of the invention, the control method further includes a step of switching the blade speed control system from the second mode to the first mode.

In one embodiment of the invention, the first mode is a normal mode, and the second mode is a heavy-load mode.

In one embodiment of the invention, the control method further includes the steps of: outputting a slowdown signal by the control unit; and enabling a brake function according to the slowdown signal by a brake unit.

To achieve the above objective, the present invention also discloses a blade speed control system, which is applied to a generator and a blade. The control system includes a processing unit, a control unit and a brake unit. The processing unit detects a voltage value and a current value of the generator and generates a modulated signal according to the voltage value and the current value. The control unit adjusts the current value according to the modulated signal and outputs a slowdown signal. The brake unit enables a brake function according to the slowdown signal.

In one embodiment of the invention, the blade speed control system is applied to a wind power generating apparatus.

In one embodiment of the invention, the blade speed control system includes a first mode and a second mode.

In one embodiment of the invention, the processing unit comprises a table containing data of a plurality voltage values and a plurality of current values of the first mode and the second mode.

In one embodiment of the invention, the processing unit switches the blade speed control system to the first mode or the second mode.

As mentioned above, the present invention is to initially set the blade speed control system to a first mode, and to use a processing unit to detect the voltage and current values of the generator so as to detect the rotation speed of the blade. When the wind speed is too high so that the rotation speed of the blade is too fast, or the battery is full, the processing unit generates the modulated signal according to the voltage and current values of the generator. Besides, the blade speed control system is switched to a second mode, and the current value of the generator is adjusted so as to increase the toque and decrease the rotation speed of the blade. When the wind speed is reduced to normal, the processing unit also generates the modulated signal according to the voltage and current values of the generator. Then, the blade speed control system is switched to the first mode, so that the control system returns the initial state.

### BRIEF DESCRIPTION OF THE DRAWINGS

The present invention will become more fully understood from the subsequent detailed description and accompanying drawings, which are given by way of illustration only, and thus are not limitative of the present invention, and wherein:

FIG. 1 is a block diagram of a blade speed control system according to an embodiment of the invention;

FIG. 2 is a table showing the data of an aspect of the blade speed control system of the invention;

FIG. 3 is a graph showing the characteristic of the blade and the generator of the invention; and

FIG. 4 is a flow chart of a control method for the blade speed control system according to an embodiment of the invention.

### DETAILED DESCRIPTION OF THE INVENTION

The present invention will be apparent from the following detailed description, which proceeds with reference to the accompanying drawings, wherein the same references relate to the same elements.

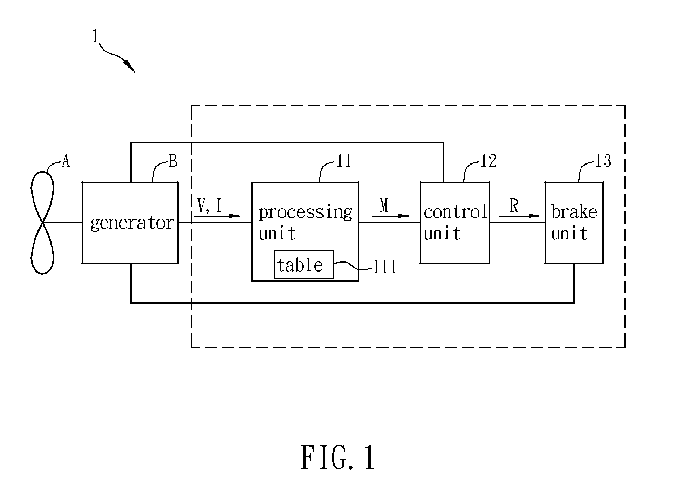

FIG. 1 is a block diagram of a blade speed control system 1 according to an embodiment of the invention. To be noted, the blade speed control system 1 of this embodiment is applied to a wind power generating apparatus. In more specific, the blade speed control system 1 is applied to a blade A and a generator B of the wind power generating apparatus for controlling the rotation speed of the blade A. The electricity generated by the generator B is stored in a battery, or directly provided as the city power (not shown). The blade speed control system 1 has a first mode and a second mode. In this embodiment, the first mode is a normal mode, and the second mode is a heavy-load mode, which will be described in detail hereinafter. In other embodiments, the blade speed control system may have a plurality of modes, such as the first, second, third and fourth modes. The blade speed control system 1 of the present embodiment includes a processing unit 11, a control unit 12 and a brake unit 13.

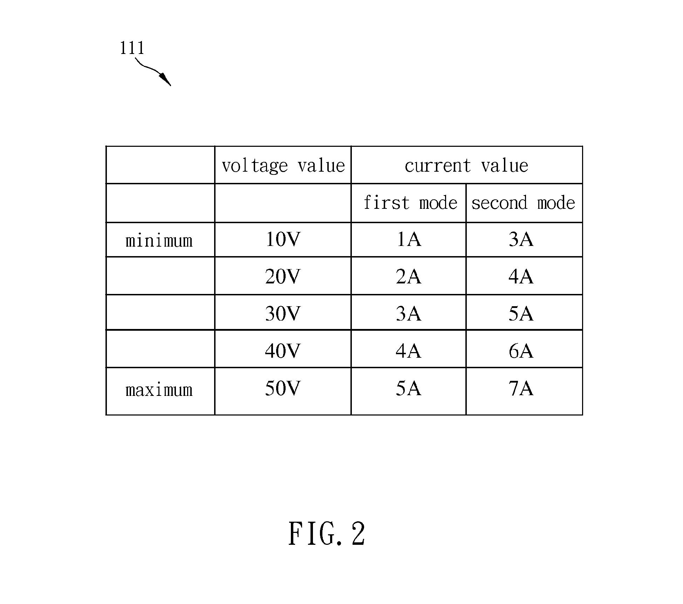

The processing unit 11 is coupled to the generator B for detecting and reading the voltage value V and the current value I of the generator B, thereby obtaining the rotation speed of the blade A. FIG. 2 is a table showing the data of an aspect of the blade speed control system of the invention. Referring to FIGS. 1 and 2, the processing unit 11 includes a table 111, which stores the data of a plurality of voltage values V and a plurality of current values I in the first and second modes. To be noted, the voltage values V and current values I listed in the table 111 are not to limit the invention, and of course, in other embodiments, the data of the voltage values and the current values can be adjusted according to the environmental factors of the wind power generating apparatus or the characteristics of the blade speed control system. When the wind power generating apparatus is operated normally (e.g. the wind speed is smaller than 12-17 m/s), the blade speed control system 1 is set as a first mode. While the wind speed increases, the rotation speed of the blade A also increases. When the detected voltage value V reaches the maximum value, and the detected current value I is larger than the maximum current of the first mode, the processing unit 11 switches the blade speed control system 1 from the first mode to a second mode and outputs a modulated signal M. In more specific, assuming the maximum of the voltage value V is 50V, and the current I is larger than the maximum (5A) of the current I of the first mode, the processing unit 11 switches the blade speed control system 1 from the first mode to a second mode and outputs a modulated signal M according to the voltage value V and the current value I.

The control unit 12 is coupled to the processing unit 11 for switching the current value I from the maximum of the first mode to the corresponding current value of the second mode according to the modulated signal M, and returning the corresponding current value to the generator B, thereby increasing the current value I of the generator B, for example, from 5A to 7A. Since the generator B is a constant power device as the battery (not shown) is full or the wind speed is too high (e.g. larger than 17 m/s), the voltage value V decreases while the current value I increases. Herein, the constant power is the maximum output power value of the generator B. Accordingly, the control unit 12 outputs a slowdown signal R.

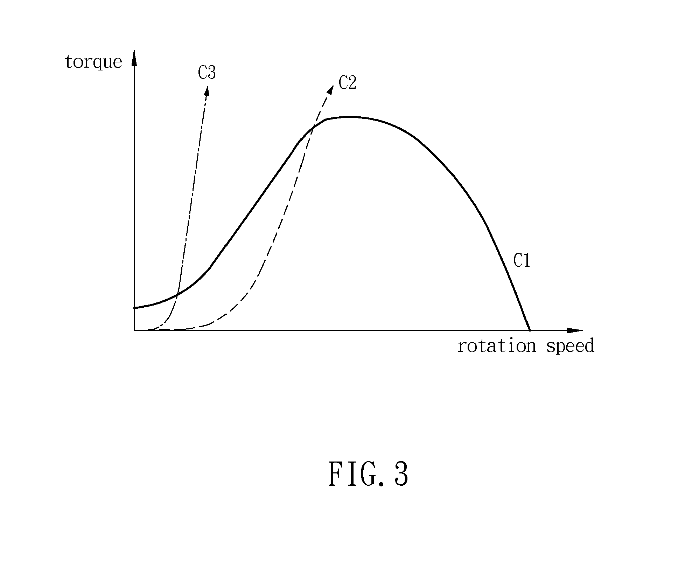

The brake unit 13 is coupled to the control unit 12 for receiving the slowdown signal R and enabling a brake function for the generator B, thereby increasing the torque of the generator B. When the torque of the blade A is smaller than that of the generator B, the rotation speed of the blade A is decreased, so that the wind power generating apparatus is effectively protected. Thus, the rotation speed of the blade A of the wind power generating apparatus is not dramatically increased due to the high wind speed, thereby protecting the bearing of the generator B from being damaged. FIG. 3 is a graph showing the characteristic of the blade and the generator of the invention, wherein the vertical axis represents the torque and the horizontal axis represents the rotation speed. As shown in FIG. 3, the curve C1 shows the characteristic of the blade A of the wind power generating apparatus, the curve C2 shows the characteristic of the generator B under a normal wind speed, and the curve C3 shows the characteristic of the generator B under a extreme high wind speed.

When the detected voltage value V is the minimum voltage value, and the detected current value I is smaller than the minimum current value of the second mode, the processing unit 11 switches the blade speed control system 1 from the second mode to the first mode. In more specific, assuming the minimum of the voltage value V is 10V, and the current I is smaller than the minimum (3A) of the current I of the second mode, the processing unit 11 switches the blade speed control system 1 from the second mode to the first mode.

In this embodiment, the first mode is a normal mode, and the second mode is a heavy-load mode. When the wind speed is normal, the blade speed control system 1 is set to the first mode. Alternatively, when the battery is full, or the wind speed increases and excesses a threshold value, and the voltage value V and the current value I of the generator B excess the values set in the first mode, the blade speed control system 1 is switched to the second mode and enables the brake function to decrease the rotation speed of the blade A. Accordingly, it is possible to protect the wind power generating apparatus and prevent the bearing of the generator B from damage. Otherwise, when the wind speed decreases to a normal speed, and the voltage value V and the current value I of the generator B are lower than the values set in the second mode, the blade speed control system 1 is switched to the first mode, thereby returning back the normal status.

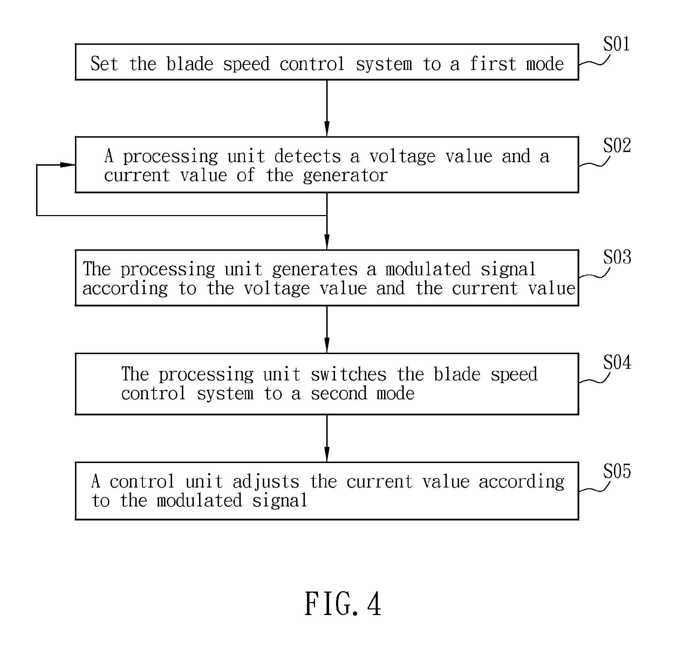

FIG. 4 is a flow chart of a control method for the blade speed control system according to an embodiment of the invention. With reference to FIG. 4 in view of FIG. 1, the control method of the blade speed control system 1 is applied to a blade A and a generator B for controlling the rotation speed of the blade A of the wind power generating apparatus. The blade speed control system 1 includes a processing unit 11, a control unit 12 and a brake unit 13, which are coupled to each other. In this embodiment, the blade speed control system 1 has two modes including a first mode and a second mode. The first mode is a normal mode which means the blade speed control system 1 is operated under the normal wind speed situation; otherwise, the second mode is a heavy-load mode, which means the blade speed control system 1 is operated under the excess wind speed situation or the full battery situation. In other embodiment, the blade speed control system may include a plurality of modes such as the first, second, third and fourth modes.

The control method of this embodiment includes the steps S01 to S05. The step S01 is to set the blade speed control system 1 to a first mode. In the step S02, the processing unit 11 detects a voltage value V and a current value I of the generator B. In the step S03, the processing unit 11 generates a modulated signal M according to the voltage value V and the current value I. In the step S04, the processing unit 11 switches the blade speed control system 1 to a second mode. In the step S05, the control unit 12 adjusts the current value I according to the modulated signal M.

First, in the step S01, the blade speed control system 1 is set to a first mode. Next, in the step S02, the processing unit 11 detects the voltage value V and the current value I of the generator B. When the wind power generating apparatus is operated normally (e.g. the wind speed is smaller than 12-17 m/s), the control method continues the step S02 for continuously detecting and monitoring the voltage value V and the current value I of the generator B. While the wind speed increases and the rotation speed of the blade A also increases so that the detected voltage value V reaches the maximum value (50V) as shown in FIG. 2, and the detected current value I is larger than the maximum current (5A) of the first mode, the processing unit 11 generates a modulated signal M according to the detected voltage value V and current value I, and switches the blade speed control system 1 from the first mode to a second mode (steps S03 and S04).

In the step S05, the control unit 12 adjusts the current value I from the maximum of the first mode to the corresponding current value of the second mode according to the modulated signal M (e.g. from 5A to 7A), and returns the corresponding current value to the generator B, thereby increasing the current value I of the generator B. Since the generator B is a constant power device as the battery is full or the wind speed is too high (e.g. larger than 17 m/s), the voltage value V decreases while the current value I increases. Herein, the constant power is the maximum output power value of the generator B. Accordingly, the control unit 12 outputs a slowdown signal R.

Finally, the brake unit 13 receives the slowdown signal R and enables a brake function for the generator B, thereby increasing the torque of the generator B. When the torque of the blade A is smaller than that of the generator B, the rotation speed of the blade A is decreased and the torque. Thus, the rotation speed of the blade A of the wind power generating apparatus is not dramatically increased due to the high wind speed, thereby protecting the bearing of the generator B as well as the wind power generating apparatus from being damaged.

When the blade speed control system 1 is in the second mode and the wind speed is still higher than 17 m/s, the step S02 is performed again to detect the voltage value V and the current value I of the generator B, thereby continuously detecting and monitoring the blade speed control system 1. When the wind speed decreases, the rotation speed of the blade A decreases accordingly. Then, when the detected voltage value V of the generator B reaches the minimum voltage value (10V) as shown in FIG. 2, and the detected current value I is smaller than the minimum current value (3A) of the second mode, the processing unit 11 generates the modulated signal M according to the voltage value V and the current value I and switches the blade speed control system 1 from the second mode to the first mode.

The control unit 12 switches the current value I from the minimum value of the second mode to the corresponding current value of the first mode (e.g. from 3A to 1A) according to the modulated signal M, and then returns it back to the generator B for decreasing the current value I of the generator B.

In summary, the present invention is to initially set the blade speed control system to a first mode, and to use a processing unit to detect the voltage and current values of the generator so as to detect the rotation speed of the blade. When the wind speed is too high so that the rotation speed of the blade is too fast, or the battery is full, the processing unit generates the modulated signal according to the voltage and current values of the generator. Besides, the blade speed control system is switched to a second mode, and the current value of the generator is adjusted so as to increase the toque and decrease the rotation speed of the blade. When the wind speed is reduced to normal, the processing unit also generates the modulated signal according to the voltage and current values of the generator. Then, the blade speed control system is switched to the first mode, so that the control system returns the initial state.

Compared with the conventional art, the present invention can effectively control the rotation speed of the blade of the wind power generating apparatus as the blade speed is too fast or the battery is full. Accordingly, it is possible to prevent the additional power consumption and the damage of the generator as well as its bearing, thereby improving the entire wind power generating performance.

Although the present invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the present invention.

## Claims

1. A control method of a blade speed control system, which is applied to a generator and a blade, the control method comprising steps of:
setting the blade speed control system to a first mode;
detecting a voltage value and a current value of the generator by a processing unit;
generating a modulated signal according to the voltage value and the current value by the processing unit;
switching the blade speed control system to a second mode by the processing unit; and
adjusting the current value according to the modulated signal by a control unit.

2. The control method of claim 1, which is applied to a wind power generating apparatus.

3. The control method of claim 1, further comprising a step of:
switching the blade speed control system from the second mode to the first mode.

4. The control method of claim 1, wherein the first mode is a normal mode.

5. The control method of claim 1, wherein the second mode is a heavy-load mode.

6. The control method of claim 1, further comprising steps of:
outputting a slowdown signal by the control unit; and
enabling a brake function according to the slowdown signal by a brake unit.

7. A blade speed control system, which is applied to a generator and a blade, the control system comprising:
a processing unit detecting a voltage value and a current value of the generator and generating a modulated signal according to the voltage value and the current value;
a control unit adjusting the current value according to the modulated signal and outputting a slowdown signal; and
a brake unit enabling a brake function according to the slowdown signal.

8. The control system of claim 7, wherein the control system is applied to a wind power generating apparatus.

9. The control system of claim 7, comprising a first mode and a second mode.

10. The control system of claim 9, wherein the processing unit comprises a table containing data of a plurality voltage values and a plurality of current values of the first mode and the second mode.

11. The control system of claim 9, wherein the processing unit switches the blade speed control system to the first mode or the second mode.
